# EUROPEAN PATENT APPLICATION

(11) **EP 4 746 577 A1**
(43) Date of publication of application: **20.05.2026**
(21) Application number: 23944758.4
(22) Date of filing: 13.07.2023
(51) Int. Cl.: H04W 76/19, H04W 36/00

(54) **COMMUNICATION CONTROL METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2023/107335
(87) International publication number: WO 2025/010745

(57) **Abstract**

Provided in the present disclosure are a communication control method and apparatus, and a communication device and a communication system. The method comprises: acquiring first information, wherein the first information is used for indicating a spatial relationship related to one or more cells configured for a terminal; and executing a first operation under a first condition, wherein the first condition is determining, on the basis of the first information, that access to a first cell among the one or more cells fails, and the first operation is used for initiating a connection recovery process. By means of the method of the present disclosure, a terminal executes a first operation under a first condition, such that the terminal triggers a connection recovery process in the case of a cell access failure, thereby improving the success probability of cell access.

## Description

### TECHNICAL FIELD

The disclosure relates to the field of communication technologies, and in particular to a method and an apparatus for controlling communication, a communication device, a communication system, and a storage medium.

### BACKGROUND

In a communication system, a network device may control a terminal to perform a change between a plurality of candidate cells (or cell groups) via a layer 1 (L1) signaling or a layer 2 (L2) signaling, which may be referred to as an L1/L2-triggered mobility (LTM) procedure.

### SUMMARY

The disclosure provides a method and an apparatus for controlling communication, a communication device, a communication system, and a storage medium.

According to a first aspect of embodiments of the disclosure, a method for controlling communication is provided. The method includes: obtaining first information, in which the first information indicates a spatial relationship associated with one or more cells configured for a terminal; and performing a first operation under a first condition, in which the first condition includes determining a failure in accessing a first cell among the one or more cells based on the first information, and the first operation is configured to initiate a connection recovery procedure, the connection recovery procedure is configured to access one of the one or more cells.

In the above embodiments, the terminal performs the first operation under the first condition, thus triggering the connection recovery procedure for the terminal in a case of determining the failure in accessing the cell, which improves a success probability of accessing the cell.

According to a second aspect of embodiments of the disclosure, a method for controlling communication is provided. The method includes: sending first information, in which the first information indicates a spatial relationship associated with one or more cells configured for a terminal; the first information is configured to assist the terminal in determining that a first condition is satisfied; and the first condition includes a failure in accessing a first cell among the one or more cells.

In the above embodiments, the network device may send the first information to the terminal, so that the terminal may quickly determine whether accessing the cell is successful, which reduce a signaling overhead used for interaction with the terminal.

According to a third aspect of embodiments of the disclosure, a terminal is provided. The terminal includes: a transceiver module, configured to obtain first information, in which the first information indicates a spatial relationship associated with one or more cells configured for the terminal; and a processing module, configured to perform a first operation under a first condition, in which the first condition includes determining a failure in accessing a first cell among the one or more cells based on the first information, and the first operation is configured to initiate a connection recovery procedure.

According to a fourth aspect of embodiments of the disclosure, a network device is provided. The network device includes: a transceiver module, configured to send first information, in which the first information indicates a spatial relationship associated with one or more cells configured for a terminal; the first information is configured to assist the terminal in determining that a first condition is satisfied; and the first condition include a failure in accessing a first cell among the one or more cells.

According to a fifth aspect of embodiments of the disclosure, a communication device is provided. The communication device includes: one or more processors, in which the one or more processors are configured to invoke instructions to cause the communication device to implement the method as described in any one of the first aspect or the second aspect.

According to a sixth aspect of embodiments of the disclosure, a communication system is provided. The communication system includes a terminal and a network device. The terminal is configured to execute the method according to the first aspect, and the network device is configured to execute the method according to the second aspect.

According to a seventh aspect of embodiments of the disclosure, a method for controlling communication is provided. The method includes: sending, by a network device, first information to a terminal, in which the first information indicates a spatial relationship associated with one or more cells configured for the terminal; determining, by the terminal, a handover from a second cell to a first cell, in which the one or more cells include the first cell; and performing, by the terminal, a first operation under a first condition, in which the first condition includes determining a failure in accessing a first cell among the one or more cells based on the first information, and the first operation is configured to initiate a connection recovery procedure, the connection recovery procedure is configured to access one of the one or more cells.

### BRIEF DESCRIPTION OF THE DRAWINGS

The above and/or additional aspects and advantages of the disclosure may become apparent and readily appreciated from the following description of embodiments in combination with the accompanying drawings.
FIG. 1 is a schematic diagram illustrating an architecture of a communication system according to an embodiment of the disclosure.
FIG. 2 is a schematic diagram illustrating interaction in a method for controlling communication according to an embodiment of the disclosure.
FIG. 3a to FIG. 3c are flowcharts illustrating a method for controlling communication according to embodiments of the disclosure.
FIG. 4a to FIG. 4c are flowcharts illustrating a method for controlling communication according to embodiments of the disclosure.
FIG. 5 is a flowchart illustrating a method for controlling communication according to an embodiment of the disclosure.
FIG. 6a is a block diagram illustrating a terminal according to an embodiment of the disclosure.
FIG. 6b is a block diagram illustrating a network device according to an embodiment of the disclosure.
FIG. 7a is a block diagram illustrating a communication device according to an embodiment of the disclosure.
FIG. 7b is a block diagram illustrating a chip according to an embodiment of the disclosure.

### DETAILED DESCRIPTION

The method of the disclosure may be used to solve the technical problem of "a terminal gives up accessing a cell in a case of a failure to access the cell".

Embodiments of the disclosure provide a method and an apparatus for controlling communication, a communication device, and a communication system.

In a first aspect, embodiments of the disclosure provide a method for controlling communication. The method includes: obtaining first information, in which the first information indicates a spatial relationship associated with one or more cells configured for a terminal; and performing a first operation under a first condition, in which the first condition includes determining a failure in accessing a first cell among the one or more cells based on the first information, and the first operation is configured to initiate a connection recovery procedure, the connection recovery procedure is configured to access one of the one or more cells.

In the above embodiment, the terminal performs the first operation under the first condition, thus triggering the connection recovery procedure for the terminal in a case of a failure in accessing a cell, which improves a success probability of accessing the cell.

In combination with some embodiments of the first aspect, in some embodiments, the method further includes: obtaining second information, in which the second information is configured to assist the terminal in determining whether the first condition is satisfied.

In the above embodiment, the terminal obtains the second information to determine whether the first condition is satisfied, which improves an accuracy of determining the failure in accessing the cell and avoids resource waste.

In combination with some embodiments of the first aspect, in some embodiments, the second information includes at least one of: a first parameter, in which the first parameter indicates a measurement threshold of a reference signal; a second parameter, in which the second parameter indicates a numerical count threshold of an uplink signal; or a third parameter, in which the third parameter indicates a type of a reference signal for the terminal to perform beam failure detection.

In combination with some embodiments of the first aspect, in some embodiments, it is determined that the first condition is satisfied based on the first information and the second information.

In the above embodiment, the terminal may determine that the first condition is satisfied based on the first information and the second information, which improves an accuracy of determining the failure in accessing the cell and reduces resource waste.

In combination with some embodiments of the first aspect, in some embodiments, determining that the first condition is satisfied based on the first information and the second information includes: determining a reference signal corresponding to the first information; obtaining a measurement value by measuring the reference signal corresponding to the first information; and determining that the measurement value is less than or equal to a first parameter, and determining that the first condition is satisfied, in which the second information includes the first parameter.

In the above embodiment, the terminal determines that the first condition is satisfied by determining that the measurement value of the reference signal corresponding to the first information is less than or equal to the first parameter, thus improving the accuracy of determining the failure in accessing the cell, avoiding misjudgment, and reducing resource waste.

In combination with some embodiments of the first aspect, in some embodiments, determining that the first condition is satisfied based on the first information and the second information includes: determining that a sending numerical count of an uplink signal corresponding to the first information is greater than or equal to a second parameter, and determining that the first condition is satisfied, in which the second information includes the second parameter.

In the above embodiment, the terminal determines that the first condition is satisfied by determining that the sending numerical count of the uplink signal corresponding to the first information is greater than or equal to the second parameter, thus improving the accuracy of determining the failure in accessing the cell, avoiding misjudgment, and thus reducing resource waste.

In combination with some embodiments of the first aspect, in some embodiments, determining that the first condition is satisfied based on the first information and the second information includes: performing beam failure detection on a first beam corresponding to the first information, in which one or more first beams are provided, a reference signal corresponding to the first beam has an association with a reference signal indicated by a third parameter, and the second information includes the third parameter; and determining that a failure occurs on the first beam, and determining that the first condition is satisfied.

In the above embodiment, the terminal performs the beam failure detection on the first beam corresponding to the first information, determines that the failure occurs on the first beam, and determines that the first condition is satisfied, thus improving the accuracy of determining the failure in accessing the cell, avoiding misjudgment, and reducing resource waste.

In combination with some embodiments of the first aspect, in some embodiments, the reference signal corresponding to the first beam having the association with the reference signal indicated by the third parameter includes any one of: the reference signal corresponding to the first beam having the same spatial relationship as the reference signal indicated by the third parameter; the reference signal corresponding to the first beam being the reference signal indicated by the third parameter; or the reference signal corresponding to the first beam belonging to the reference signal indicated by the third parameter.

In combination with some embodiments of the first aspect, in some embodiments, performing the first operation includes at least one of: sending connection failure information, in which the connection failure information is configured to identify relevant information of the failure in accessing the first cell; or initiating a connection recovery access procedure, in which the connection recovery procedure is configured to access one of the one or more cells.

In the above embodiment, the terminal sends the connection failure information and initiates the connection recovery access procedure, thus implementing the connection recovery procedure for the terminal and improving the success probability of access the cell.

In combination with some embodiments of the first aspect, in some embodiments, the connection failure information includes at least one of: a sending numerical count of an uplink signal sent during a process of accessing the first cell; an identifier of the first cell; an identifier of a bandwidth part (BWP) used during a process of accessing the first cell; an identifier of a reference signal corresponding to the first information; or an access type corresponding to accessing the first cell.

In combination with some embodiments of the first aspect, in some embodiments, initiating the connection recovery access procedure includes: determining a first reference signal; and initiating the connection recovery access procedure using the first reference signal.

In the above embodiment, the terminal determines the first reference signal and initiates the connection recovery access procedure using the first reference signal, thus improving the success rate of the terminal accessing the cell and reducing the probability of the terminal failing to access the cell again.

In combination with some embodiments of the first aspect, in some embodiments, the first reference signal includes at least one of: a reference signal other than a reference signal corresponding to the first information; a reference signal configured for the first cell by a network device; or a reference signal with a measurement value greater than or equal to a preset threshold.

In combination with some embodiments of the first aspect, in some embodiments, the connection recovery procedure includes any one of: a first access procedure, in which the first access procedure is initiated via a random access channel (RACH), and the first access procedure includes at least one of a 2-step random access procedure or a 4-step random access procedure; or a second access procedure, in which the second access procedure is not initiated via a RACH, and the second access procedure includes at least one of dynamic scheduling or semi-persistent scheduling.

In combination with some embodiments of the first aspect, in some embodiments, a second operation is performed under a second condition, in which the second operation is configured to initiate a connection reestablishment procedure, and the second condition includes that a first numerical count is greater than or equal to a preset numerical count threshold or a first duration is greater than or equal to a preset duration threshold.

In the above embodiment, the terminal performs the second operation under the second condition, enabling the terminal to determine a scenario for initiating connection reestablishment, thus reducing resource waste.

In combination with some embodiments of the first aspect, in some embodiments, the first numerical count is a sum of a numerical count of failures in accessing the first cell and a numerical count of initiating the connection recovery procedure for the first cell, and the first duration is a sum of a duration of failures in accessing the first cell and a duration of initiating the connection recovery procedure for the first cell.

In combination with some embodiments of the first aspect, in some embodiments, the first information is carried by a first message, and the first message indicates the terminal to perform a cell change.

In the above embodiment, the terminal receives the first information via the first message, thus the terminal may determine whether accessing the cell is successful during a dynamic cell change, which reduces signaling interaction for the terminal.

In a second aspect, embodiments of the disclosure provide a method for controlling communication. The method includes: sending first information, in which the first information indicates a spatial relationship associated with one or more cells configured for a terminal; the first information is configured to assist the terminal in determining that a first condition is satisfied; and the first condition includes a failure in accessing a first cell among the one or more cells.

In the above embodiment, the network device may send the first information to the terminal, so that the terminal may quickly determine whether accessing the cell is successful, thus reducing a signaling overhead for interaction with the terminal.

In combination with some embodiments of the second aspect, in some embodiments, the method further includes: sending second information, in which the second information is configured to assist the terminal in determining whether the first condition is satisfied.

In the above embodiment, the network device may send the second information to the terminal, so that the terminal may determine whether the first condition is satisfied, thus reducing the signaling overhead for the interaction with the terminal, improving an accuracy of determining the failure in accessing the cell by the terminal, and avoiding resource waste.

In combination with some embodiments of the second aspect, in some embodiments, the second information is configured to assist the terminal in determining that the first condition is satisfied, and the second information includes at least one of: a first parameter, in which the first parameter indicates a measurement threshold of a reference signal; a second parameter, in which the second parameter indicates a numerical count threshold of an uplink signal; or a third parameter, in which the third parameter indicates a type of a reference signal for the terminal to perform beam failure detection.

In combination with some embodiments of the second aspect, in some embodiments, the method further includes: obtaining connection failure information, in which the connection failure information includes at least one of: a sending numerical count of an uplink signal sent during a process of accessing the first cell; an identifier of the first cell; an identifier of a BWP used during a process of accessing the first cell; an identifier of a reference signal corresponding to the first information; or an access type corresponding to accessing the first cell.

In the above embodiment, the network device may obtain the connection failure information, to determine a cause of the failure in accessing the cell, and make improvements, thus reducing a probability of the failure in accessing the cell subsequently.

In combination with some embodiments of the second aspect, in some embodiments, the first information is carried by a first message, and the first message indicates the terminal to perform a cell change.

In the above embodiment, the network device sends the first information via the first message, so that the terminal may determine whether accessing the cell is successful during a dynamic cell change, thus reducing signaling interaction for the terminal.

In a third aspect, embodiments of the disclosure provide a terminal. The terminal includes: a transceiver module, configured to obtain first information, in which the first information indicates a spatial relationship associated with one or more cells configured for the terminal; and a processing module, configured to perform a first operation under a first condition, in which the first condition includes determining a failure in accessing a first cell among the one or more cells based on the first information, and the first operation is configured to initiate a connection recovery procedure.

In a fourth aspect, embodiments of the disclosure provide a network device. The network device includes: a transceiver module, configured to send first information, in which the first information indicates a spatial relationship associated with one or more cells configured for a terminal; the first information is configured to assist the terminal in determining that a first condition is satisfied; and the first condition includes a failure in accessing a first cell among the one or more cells.

In a fifth aspect, embodiments of the disclosure provide a communication device. The communication device includes: one or more processors and one or more memories storing instructions. The one or more processors are configured to invoke instructions to cause the communication device to implement the method for controlling communication as described in the first aspect, the second aspect, or optional implementations of the first aspect and the second aspect.

In a sixth aspect, an embodiment of the disclosure provides a communication system. The communication system includes: a terminal and a network device. The terminal is configured to implement the method as described in the first aspect or optional implementations of the first aspect, and the network device is configured to implement the method as described in the second aspect or optional implementations of the second aspect.

In a seventh aspect, embodiments of the disclosure provide a method for controlling communication. The method includes: sending, by a network device, first information to a terminal, in which the first information indicates a spatial relationship associated with one or more cells configured for the terminal; determining, by the terminal, a handover from a second cell to a first cell, in which the one or more cells include the first cell; and performing, by the terminal, a first operation under a first condition, in which the first condition includes determining a failure in accessing a first cell among the one or more cells based on the first information, and the first operation is configured to initiate a connection recovery procedure, the connection recovery procedure is configured to access one of the one or more cells.

It may be understood that the terminal, the network device, the communication device, and the communication system are all used to implement the method in embodiments of the disclosure. Thus, regarding beneficial effects they may achieve, reference may be made to the beneficial effects in the corresponding methods, which is not repeated herein.

Embodiments of the disclosure provide a method for controlling communication. In some embodiments, terms such as "method for controlling communication", "method for information processing", and "communication method" may be used interchangeably, terms such as "apparatus for information transmitting", "apparatus for information processing", and "communication apparatus" may be used interchangeably, and terms such as "information processing system", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, part of or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun following the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In embodiments of the disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in a case of/that...", "upon", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be used interchangeably, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "BWP" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, an access network device, a core network device, or a network device may be replaced by the terminal. For example, various embodiments of the disclosure may also be applied to a structure in which communication between the access network device, the core network device, or the network device and the terminal is replaced by communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, "uplink channel", "downlink channel", etc. may be replaced by "side channel", and "uplink", "downlink", etc. may be replaced by "sidelink".

In some embodiments, the terminal may be replaced by the access network device, the core network device, or the network device. In this case, the access network device, the core network device, or the network device may also be configured to have a structure that has all or part of functions of the terminal.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, the terms such as "uplink", "up link", "physical uplink" may be interchangeable, and terms such as "downlink", "down link", "physical downlink" may be interchangeable, and the terms such as "side", "sidelink", "side communication", "sidelink communication", "direct connection", "direct link", "direct communication", "direct link communication" may be used interchangeably.

In some embodiments, the terms "downlink control information (DCI)", "downlink (DL) assignment", "DL DCI", "uplink (UL) grant", "UL DCI" and the like may be used interchangeably.

In some embodiments, the terms such as "physical downlink shared channel (PDSCH)", "DL data" and the like may be interchangeable, and the terms such as "physical uplink shared channel (PUSCH)", "UL data" and the like may be used interchangeably.

In some embodiments, the terms "radio", "wireless", "radio access network (RAN)", "access network (AN)", "RAN-based" and the like may be used interchangeably.

In some embodiments, terms such as "synchronization signal (SS)", "synchronization signal block (SSB)", "reference signal (RS)", "pilot", "pilot signal" and the like may be used interchangeably.

In some embodiments, the terms such as "moment", "time point", "time", "time position" and the like may be interchangeable, and the terms such as "duration", "period", "time window", "window", "time" and the like may be used interchangeably.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like may be used interchangeably.

In some embodiments, "obtain", "acquire", "get", "receive", "transmit", "bidirectional transmission", "send and/or receive" may be interchangeable, and may be interpreted as receiving from other entities, obtaining from a protocol, obtaining by self-processing, autonomous implementation, etc.

In some embodiments, the terms such as "send", "transmit", "report", "issue", "transmit", "bi-directionally transmit", "send and/or receive" and the like may be used interchangeably.

In some embodiments, "predetermined" or "preset" may be interpreted as being prespecified in a protocol, etc., or may be interpreted as an apparatus performing a pre-set action, etc.

In some embodiments, "determining" may be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, the acquisition of data, information, etc. may comply with the laws and regulations of the country where the data is obtained.

In some embodiments, data, information, etc. may be obtained with consent from users.

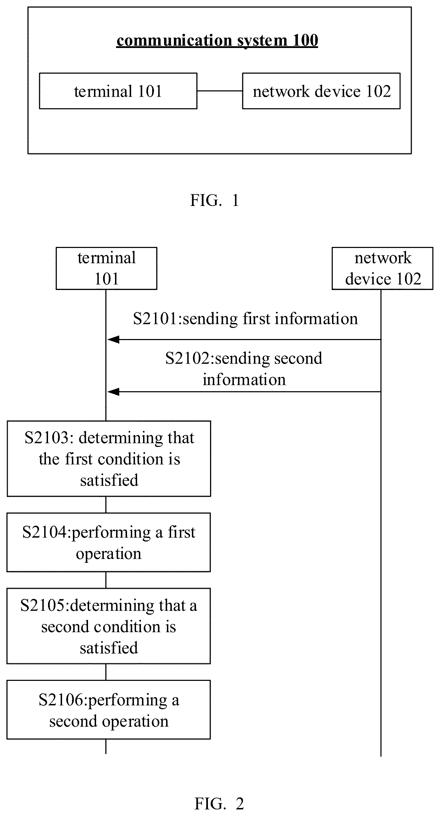

FIG. 1 is a schematic diagram illustrating an architecture of a communication system according to an embodiment of the disclosure. As shown in FIG. 1, the communication system 100 may include a terminal 101 and a network device 102. The network device 102 may include at least one of: an access network device, or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless networking (Wi-Fi^{™}) system, but is not limited thereto.

In some embodiments, the technical solution of the disclosure may be applicable to an Open RAN architecture. In this case, interfaces between or within access network devices involved in embodiments of the disclosure may become internal interfaces of the Open RAN, and processes and information interactions between these internal interfaces may be implemented through software or programs.

In some embodiments, the network device 102 may include at least one of: an access network device, or a core network device.

In some embodiments, the access network device may include a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited thereto.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to dynamic cell (or cell group) change. For example, in a 5G system, a network device may provide a plurality of candidate cells (or cell groups) to a terminal. Subsequently, the network device may control the terminal to perform a change between the plurality of candidate cells (or cell groups) via a layer 1 (L1) signaling (e.g., downlink control information, DCI) or a layer 2 (L2) signaling (L2) (e.g., media access control (MAC) control element (CE)) (e.g., changing an operating cell (or cell group) from a candidate cell (or cell group)-1 to a candidate cell (or cell group)-2). A serving cell (or cell group) may correspond to one or more "candidate cells (or cell groups)". This process may also be referred to as an L1/L2-triggered mobility (LTM) procedure.

In an example, the 5G system adopts a dual connectivity (DC) architecture. The DC architecture includes two cell (or cell group) groups: a master cell group (MCG) which corresponds to a master node (MN) at the network device side; and a secondary cell group (SCG), which corresponds to a secondary node (SN) at the network device side. The MCG includes one PCell (primary cell (or cell group) and one or more SCells (secondary cells (or cell groups). The SCG includes one PSCell (primary secondary cell (or cell group)) and one or more SCells. The PCell and the PSCell may be collectively referred to as a SpCell (special cell (or cell group).

In an example, layer 2 entities used for controlling data transmission and reception at the terminal side and the network device side may include: MAC, radio link control (RLC), packet data convergence protocol (PDCP), and service data adaptation protocol (SDAP). During mobility of the terminal, the network device may indicate, via an RRC configuration, performing reestablishment, reset, or recovery processing on the layer 2 entities. In this case, the reestablishment or reset involves setting relevant variables of the L2 entities to initial values (e.g., 1) and discarding stored data. In this case, the recovery involves retransmitting data of the L2 entities. The reset may be full reset or partial reset, which is not limited herein.

In an example, in the 5G system, the terminal may perform a change based on a condition preconfigured by the network device and a preconfigured cell (or cell group) associated with the condition. When the terminal satisfies the "preconfigured condition" (e.g., a specific measurement event), the terminal changes the serving cell (or cell group) to the "preconfigured cell (or cell group)". In this case, a condition-triggered mobility procedure includes: conditional handover (CHO), conditional PScell addition (CPA), and conditional PScell change (CPC).

The terminal may also change, based on a network indication, a configuration of the specific cell (or cell group) after satisfying the "preconfigured condition" (e.g., changing a PCell configuration of the terminal from a candidate cell (or cell group) configuration-1 to a candidate cell (or cell group) configuration-2).

FIG. 2 is a schematic diagram illustrating interaction in a method for controlling communication according to an embodiment of the disclosure. As shown in FIG. 2, embodiments of the disclosure relate to a method for controlling communication. The method is configured in a communication system 100 and includes the following steps S2101 to S2106.

At step 2101, a network device 102 sends first information to a terminal 101.

In some embodiments, the terminal 101 may obtain the first information. For example, the terminal 101 may receive the first information sent by the network device 102.

In some embodiments, the first information indicates a spatial relationship associated with one or more cells configured for the terminal 101. In an example, the first information indicates the spatial relationship associated with the one or more cells configured for the terminal by the network device 102. In an example, the first information indicates a spatial relationship of one or more beams corresponding to each of the one or more cells. That is, the first information may indicate relevant information of beams in different spatial directions corresponding to a cell.

In some embodiments, the spatial relationship of one or more beams corresponding to each of the one or more cells may be a coverage range of the one or more beams over a cell space. For example, a spatial coverage region of cell #1 may be divided into space a, space b, and space c, in which space a is covered by beam #1, space b is covered by beam #2, and space c is covered by beam #3. A correspondence between the spatial coverage region of cell #1 and the beam is a spatial relationship between cell #1 and beam #1, beam #2, and beam #3.

In some embodiments, the first information is configured to assist the terminal 101 in determining that a first condition is satisfied, and the first condition includes a failure in accessing a first cell among the one or more cells. In an example, the first information is configured to assist the terminal 101 in determining whether the first condition is satisfied.

In some embodiments, the name of the first information is not limited in the disclosure, which may be, for example, "spatial relationship information", "spatial indication information", "spatial information", etc. The form of the first information is also not limited in the disclosure, which may be, for example, a value, a table, etc.

In some embodiments, the first information may be a transmission configuration indicator (TCI)-state or quasi-co-location (QCL). Other information that may indicate or identify the spatial relationship is also included within the scope of the first information of the disclosure, which is not repeated herein.

In some embodiments, the spatial relationship information is identified by at least one of the following reference signals: a synchronization signal/PBCH block (SSB); or a channel state information-reference signal (CSI-RS). The spatial relationship information may also be identified by other reference signals, which is not limited in the disclosure.

In some optional embodiments, the "one or more cells" may be one or more candidate cells. In an example, the "one or more cells" may be one or more candidate cells configured for the terminal by the network device.

In some embodiments, the network device provides one or more "candidate configurations" to the terminal, for example, the network device provides "candidate configurations" via a downlink message (e.g., an RRC reconfiguration message). The "candidate configuration" may include one or more configurations of one or more candidate cells. A configuration of a candidate cell may be a configuration identifier of the candidate cell (e.g., configuration 1, configuration-1), a candidate cell identifier (e.g., cell 1, cell-1, or cell group 1, cellGroup-1), etc. The cell identifier may include at least one of: a physical cell identifier (e.g., physical cell identifier (PCI-1)), a cell global identifier (e.g., cell global identifier-1 (CGI-1)), a frequency point identifier (e.g., absolute radio frequency channel number (ARFCN)), which is not limited in the disclosure.

The "cell", "candidate cell", and "target cell" described in the disclosure may refer to a single cell or a single cell group, and the single cell group includes a plurality of cells, which is not limited in the disclosure. In some embodiments, a candidate cell may be a single candidate cell or a cell group including a plurality of candidate cells. The cell group may be any one of: a cell group including a plurality of PCells, a cell group including a plurality of SCells, a cell group including one PCell and one or more SCells, a cell group including one PSCell and one or more SCells, an MCG, or an SCG.

In some embodiments, the one or more candidate cells configured by the network device 102 for the terminal 101 may be used for a cell change. In an example, the network device 102 may control, via a signaling, the terminal 101 to perform a change among the one or more candidate cells. In an example, the network device 102 may control, via a control signaling, the terminal to perform the change among a plurality of candidate configurations. This control signaling may be referred to as "cell change control signaling". The control signaling may be a L1 signaling or a L2 signaling, in which the L1 signaling may be a DCI signaling, and the L2 signaling may be a MAC CE signaling. "The terminal performing the change among the plurality of candidate configurations" may mean that the terminal 101 changes a operating cell (or cell group) from "cell (or cell group)-1" to "cell (or cell group)-2". This process may also be referred to as an LTM procedure.

In some embodiments, the first information may be carried by a first message. In an example, the first message indicates the terminal to perform the cell change. In an example, the first message is configured to trigger the LTM procedure. That is, the network device may send the first message to the terminal, and the first message carries the first information.

In some embodiments, the name of the first message is not limited, which may be "cell change control signaling", "cell change control command", "LTM trigger command", "dynamic cell change command", "cell switch command", etc., which is not limited in the disclosure.

In some embodiments, the first information may be configured by the network. For example, the terminal 101 may receive a message or a signaling sent by the network device 102, and the message or the signaling carries the first information. In some optional embodiments, the first information may be agreed by a protocol or predefined, and the terminal 101 may obtain the first information via the protocol agreed or predefinition, which is not limited in the disclosure.

A second cell is a cell providing a service to the terminal before the cell change, i.e., a source cell. A first cell is a cell that provides a service to the terminal after the cell change, i.e., a target cell. There may be a plurality of network devices. For example, the first cell corresponds to a first network device, and the second cell corresponds to a second network device. In an example, there may be one network device. For example, the network device may correspond to a plurality of cells, and the network device may cover the first cell and the second cell.

At step 2102, the network device 102 sends second information to the terminal 101.

In some embodiments, the terminal 101 may obtain the second information. In an example, the terminal 101 may receive the second information sent by the network device 102.

In some embodiments, the second information is configured to assist the terminal in determining whether the first condition is satisfied.

In some embodiments, the second information indicates a parameter for determining whether the first condition is satisfied.

In some embodiments, the name of the second information is not limited, which may be, for example, "access failure configuration information", "failure recovery configuration information", "failure threshold configuration information", etc.

In some embodiments, the second information includes at least one of: a first parameter, in which the first parameter indicates a measurement threshold of a reference signal; a second parameter, in which the second parameter indicates a numerical count threshold of an uplink signal; or a third parameter, in which the third parameter indicates a type of a reference signal for the terminal to perform beam failure detection.

In some embodiments, the name of the first parameter is not limited, which may be, for example, "measurement threshold", "measurement threshold value", etc.

In an example, the first parameter may be a measurement threshold of a reference signal corresponding to the first information. For example, the first parameter may be a threshold for reference signal receiving power (RSRP). When an RSRP of the reference signal corresponding to the first information measured by the terminal 101 is lower than the threshold, it is determined that the first condition is satisfied, that is, accessing the first cell fails.

In some embodiments, the name of the second parameter is not limited, which may be, for example, "numerical count threshold", "numerical count threshold value", etc.

In an example, the second parameter may be a threshold for a numerical count of uplink signals sent by the terminal 101. For example, the second parameter may be a threshold for a sending numerical count of a PUSCH in RACH-less. When the numerical count of the terminal 101 sending the PUSCH exceeds the threshold, it is determined that the first condition is satisfied, that is, accessing the first cell fails.

In some embodiments, the name of the third parameter is not limited, which may be, for example, "reference signal type", "beam failure detection type", etc.

In an example, the third parameter may be a reference signal corresponding to the beam failure detection for the first information. For example, the third parameter may be SSB#1, that is, the network device 102 instructs the terminal to perform the beam failure detection on SSB#1. In an example, the network device 102 may also configure the measurement threshold of the reference signal for the terminal 101. For example, when a measurement result of the beam failure detection on SSB#1 by the terminal is lower than the threshold, the beam detection failure is determined, thus it may be determined that the first condition is satisfied, that is, accessing the first cell fails. In an example, the network device 102 may also configure a beam failure numerical count threshold for the terminal 101. When the beam failure numerical count exceeds the threshold, it is determined that the first condition is satisfied, that is, accessing the first cell fails.

In some embodiments, the first condition includes determining a failure in accessing a first cell among one or more cells. In an example, the first condition includes that the terminal 101 determines the failure in accessing the first cell. In an example, the first condition includes that the terminal 101 determines the failure in accessing the first cell based on the first information and the second information.

In some embodiments, the name of the first condition is not limited, which may be, for example, "access procedure failure", "access failure", etc.

In some embodiments, the first cell is any one of the one or more cells. In an example, the first cell may be any one of the one ore more candidate cells configured by the network device 102. In an example, the first cell may be a target cell, that is, a target cell during a cell change procedure, or a cell providing a service to the terminal 101 after the cell change.

In some embodiments, accessing the first cell may refer to the terminal 101 initiating an access procedure in the first cell. The access procedure may include any one of: a first access procedure or a second access procedure.

The first access procedure is initiated via a RACH.

In some embodiments, the first access procedure may be a RACH-based access procedure.

In some embodiments, the first access procedure may include at least one of a 2-step random access procedure or a 4-step random access procedure.

In an example, in the 2-step random access procedure, the terminal 101 sends MsgA, the network provides feedback MsgB, the terminal 101 matches MsgB with MsgA and determines whether contention is resolved to determine whether to access the cell.

In an example, in the 4-step random access procedure, the terminal 101 sends Msg1, the network provides feedback Msg2, the terminal 101 sends Msg3 according to an uplink (UL) grant in Msg2, the network provides feedback Msg4, the terminal matches Msg3 with Msg4 and determines whether contention is resolved, to determine whether to access the cell.

In some embodiments, the failure in accessing the first cell may refer to that: in the 2-step random access procedure, the terminal 101 does not receives MsgB fed back by the network; or, in the 4-step random access procedure, the terminal 101 does not receives Msg2 and/or Msg4 fed back by the network.

The second access procedure is not initiated via the RACH.

In some embodiments, the second access procedure may be a RACH-less access procedure. That is, the terminal 101 may not initiate the random access procedure in the target cell.

In some embodiments, the second access procedure includes at least one of dynamic scheduling or semi-persistent scheduling. That is, the terminal 101 does not initiate the random access in the target cell, and an uplink transmission resource of the target cell may be indicated to the terminal 101 via the above manners.

In an example, in a dynamic scheduling procedure, the terminal 101 obtains an uplink grant (i.e., a dynamic grant) by monitoring a PDCCH of the target cell. After obtaining the uplink grant, the terminal 101 sends the PUSCH to the network device to access the first cell.

In an example, in a semi-persistent scheduling procedure, the network configures a periodic uplink grant (i.e., configured grant). After obtaining the uplink grant, the terminal 101 sends the PUSCH to the network device 102 to access the first cell.

In some embodiments, the failure in accessing the first cell may refer to that: in the RACH-less access procedure, the terminal fails in sending the PUSCH.

At step 2103, the terminal 101 determines that the first condition is satisfied.

In some embodiments, the terminal 101 may determine whether the first condition is satisfied based on the first information and the second information.

In some embodiments, the terminal 101 may determine whether the first condition is satisfied via various methods based on the first information and the second information.

Three possible methods are introduced below. It should be understood that the following three methods do not constitute a limitation on other methods that may achieve the above objective.

### Method one:

In some embodiments, the method one corresponds to a failure type 1, i.e., a measurement value of a reference signal corresponding to "spatial relationship information" is less than or equal to a threshold.

In some embodiments, the terminal 101 may determine the reference signal corresponding to the first information, and measure the reference signal corresponding to the first information, to determine whether the measurement value of the reference signal is less than or equal to the first parameter.

In some embodiments, in a case that the terminal 101 determines that the measurement value is less than or equal to the first parameter, the terminal 101 determines that the first condition is satisfied.

In some embodiments, the terminal 101 may measure the reference signal corresponding to the first information. For example, reference signals corresponding to the first information (TCI-state#1) are SSB#1 and SSB#2. The terminal may measure SSB#1 and SSB#2, for example, an RSRP of SSB#1 and an RSRP of SSB#2. The terminal 101 may obtain the first parameter configured by the network device 102, and the first parameter is an RSRP threshold. When a measurement value of the reference signal corresponding to the first information measured by the terminal 101 is less than or equal to the threshold, it is determined that the first condition is satisfied, i.e., an access procedure failure occurs, that is, accessing the first cell fails.

In some embodiments, when the first information corresponds to the plurality of reference signals, the terminal 101 may determine that the first condition is satisfied in a case where at least one measurement value among the measurement values of the plurality of reference signals is less than or equal to the first parameter. For example, in the above example, any one of the RSRP of SSB#1 or the RSRP of SSB#2 is less than or equal to the threshold, it is determined that the first condition is satisfied.

In some embodiments, when the first information corresponds to the plurality of reference signals, the terminal 101 may determine that the first condition is satisfied in a case where measurement values of all of the reference signals are less than or equal to the first parameter. For example, in the above example, the measurement values of the RSRP of SSB#1 and the RSRP of SSB#2 are less than or equal to the threshold, it is determined that the first condition is satisfied.

### Method two:

In some embodiments, the method two corresponds to a failure type 2, i.e., a sending numerical count of an uplink signal by the terminal 101 is greater than or equal to a threshold.

In some embodiments, in a case that the terminal 101 determines that the sending numerical count of the uplink signal corresponding to the first information is greater than or equal to the second parameter, the terminal 101 determines that the first condition is satisfied.

In some embodiments, the uplink signal may be MsgA sent by the terminal 101 to the network device 102 in the 2-step random access procedure, may be Msg1 or Msg3 sent by the terminal 101 to the network device 102 in the 4-step random access procedure, or may be a PUSCH sent by the terminal 101 to the network device 102 in the RACH-less access procedure.

In an example, in the RACH-based access procedure, for example, the 2-step random access procedure, the terminal 101 may send MsgA to the network device 102. When a numerical count of sending MsgA by the terminal 101 is greater than or equal to the second parameter, it is determined that the first condition is satisfied, i.e., an access procedure failure occurs, that is, accessing the first cell fails.

In an example, in the RACH-based access procedure, for example, the 4-step random access procedure, the terminal 101 may send Msg1 to the network device 102. When a numerical count of sending Msg1 by the terminal 101 is greater than or equal to the second parameter, it is determined that the first condition is satisfied, i.e., an access procedure failure occurs, that is, accessing the first cell fails. In an example, after the terminal 101 sends Msg1 to the network device 102, the network provides feedback Msg2, and the terminal 101 may send Msg3 based on an uplink grant in Msg2. When a numerical count of sending Msg3 by the terminal 101 is greater than or equal to the second parameter, it is determined that the first condition is satisfied, i.e., an access procedure failure occurs, that is, accessing the first cell fails.

In an example, in the RACH-less access procedure, the terminal 101 may send a PUSCH to the network device 102 after obtaining the uplink grant via the dynamic scheduling or the semi-persistent scheduling. When a numerical count of sending the PUSCH by the terminal 101 is greater than or equal to the second parameter, it is determined that the first condition is satisfied, i.e., an access procedure failure occurs, that is, accessing the first cell fails.

### Method three.

In some embodiments, the method three corresponds to a failure type 3, i.e., the beam failure occurs.

In some embodiments, the terminal 101 may perform beam failure detection on a first beam corresponding to the first information, determine that a failure occurs on the first beam, and determine that the first condition is satisfied.

In some embodiments, one or more first beams are provided, a reference signal corresponding to the first beam has an association with a reference signal indicated by a third parameter, and the second information includes the third parameter.

In some embodiments, one or more first beams are provided, which means that the type of the beam failure includes any one of: 1) at least one beam corresponding to the first information being failed, i.e., at least one beam corresponding to the "spatial relationship information" being failed, that is, a failure occurs on any one or several beams, it is determined that the beam failure occurs; or 2) all of beams corresponding to the first information being failed, i.e., a failure occurs on all of the beams corresponding to the "spatial relationship information" , that is, it is determined that the beam failure occurs only when a failure occurs on all of the beams.

In some embodiments, the reference signal corresponding to the first beam having the association with the reference signal indicated by the third parameter includes any one of the following.
1) The reference signal corresponding to the first beam has the same spatial relationship as the reference signal indicated by the third parameter.

In some embodiments, the first information corresponds to the first beam, the reference signal corresponding to the first beam is a first reference signal, and the reference signal indicated by the third parameter in the second information configured by the network device is a second reference signal. Thus, the first reference signal and the second reference signal have the same spatial relationship.

In some embodiments, "having the same spatial relationship" may mean that the first reference signal and the second reference signal have the same TCI-state or QCL.

For example, the first information (e.g., "spatial relationship information") may be carried by the first message (e.g., "cell change control signaling"). Then, a reference signal for the beam failure detection having the same "spatial relationship" as a reference signal identified by the "spatial relationship information" indicated by the "cell change control signaling" is a reference signal for the beam failure detection.

For example, a reference signal indicated by the "spatial relationship information" in the "cell change control signaling" (i.e., the reference signal corresponding to the first beam) is SSB#1. A reference signal configured for the beam failure detection (i.e., the reference signal indicated by the third parameter) is SSB#2, and SSB#1 and SSB#2 have the same spatial relationship. For example, SSB#1 and SSB#2 have the same TCI-state or QCL identifier.

2) The reference signal corresponding to the first beam is the reference signal indicated by the third parameter.

In some embodiments, the first information corresponds to the first beam, the reference signal corresponding to the first beam is the first reference signal, and the terminal may use the first reference signal for the beam failure detection. That is, the first reference signal is the reference signal for the beam failure detection.

For example, the first information (e.g., "spatial relationship information") may be carried by the first message (e.g., "cell change control signaling"). Then, the reference signal identified by the "spatial relationship information" indicated by the "cell change control signaling" may be used for the beam failure detection. For example, if the "spatial relationship information" indicated by the "cell change control signaling" indicates SSB#1, then SSB#1 is used for the beam failure detection.

3) The reference signal corresponding to the first beam belongs to the reference signal indicated by the third parameter.

In some embodiments, the first information corresponds to the first beam, the reference signal corresponding to the first beam is the first reference signal, one or more first reference signals are provided, the reference signal indicated by the third parameter in the second information configured by the network device is the second reference signal, one or more second reference signals are provided, the first reference signal belongs to the second reference signal, or the second reference signal includes the first reference signal. This means the reference signal corresponding to the first beam has the association with the reference signal indicated by the third parameter.

For example, the first information (e.g., "spatial relationship information") may be carried by the first message (e.g., "cell change control signaling"). When the reference signal indicated by the third parameter (i.e., "a reference signal configured for beam failure detection") belongs to a reference signal identified by the "spatial relationship information" indicated by the "cell change control signaling", the "reference signal configured for beam failure detection" may be used for the beam failure detection.

For example, the "spatial relationship information" indicated by the "cell change control signaling" indicates SSB#1. The reference signals configured for the beam failure detection are SSB#1 (e.g., for BFD RS Set#1) and SSB#2 (e.g., for BFD RS Set#2). Then SSB#1 is used for the beam failure detection.

The above methods may be used individually or in combination, which is not limited in the disclosure.

At step 2104, the terminal 101 performs a first operation.

In some embodiments, the first operation is configured to initiate a connection recovery procedure.

In some embodiments, the first operation is configured to re-access the target cell.

In some embodiments, the name of the first operation is not limited, which may be, for example, "connection recovery access procedure", "re-access procedure", "connection recovery procedure", etc.

In some implementations, the terminal 101 may perform the first operation in a case where the first condition is satisfied.

In some embodiments, performing the first operation includes at least one of: sending connection failure information; or initiating the connection recovery access procedure. The connection failure information is configured to identify relevant information of the failure in accessing the first cell, to assist in optimizing a network configuration; and the connection recovery procedure is configured to access one of one or more cells, to improve a success rate of accessing the cell.

For example, the terminal 101 performing the first operation may include the terminal 101 sending the connection failure information. In an example, the terminal 101 may send the connection failure information to the network device 102.

In some embodiments, the connection failure information indicates information related to the failure of the terminal 101 in accessing the first cell.

In some embodiments, the name of the connection failure information is not limited, which may be, for example, "access failure information", "failure information", etc.

In some embodiments, the connection failure information includes at least one of the following.
1) A sending numerical count of an uplink signal sent during a process of accessing the first cell.
   In some embodiments, the sending numerical count of the uplink signal may be an uplink transmission numerical count, for example, a numerical count of sending Msg1 by the terminal in the 4-step access procedure during the RACH-based access procedure.
2) An identifier of the first cell.
   In some embodiments, the identifier of the first cell is an identifier of a cell where the failure occurs. The identifier may be a configuration identifier of the cell (e.g., configuration 1, configuration-1), a cell identifier (e.g., cell 1, cell-1, or cell group 1, cellGroup-1), etc. The cell identifier may include at least one of: a physical cell identifier (e.g., PCI-1), a cell global identifier (e.g., CGI-1), or a frequency point identifier (e.g., ARFCN), which is not limited in the disclosure.
   In some embodiments, the first cell may refer to a single cell or a cell group composed of a plurality of cells, which is not limited in the disclosure.
3) An identifier of a BWP used during the process of accessing the first cell.
   In some embodiments, the identifier of the BWP used during the process of accessing the first cell may be an identifier of the BWP where the failure occurs, for example, BWP#1, etc.
4) An identifier of a reference signal corresponding to the first information.
   In some embodiments, the identifier of the reference signal corresponding to the first information may be an identifier of the reference signal where the failure occurs, for example, SSB#1 or CSI-RS#1, etc.
5) An access type corresponding to accessing the first cell.

In some embodiments, the access type corresponding to accessing the first cell may be an uplink access type where the failure occurs, such as the 2-step random access procedure; or the 4-step random access procedure; or the RACH-less access (e.g., dynamically scheduled RACH-less access; or semi-persistently scheduled RACH-less access).

In some embodiments, there may be one or more access types during the process of accessing the first cell. The terminal may send part of these access types or all of the access types, which is not limited in the disclosure.

In some embodiments, performing the first operation may further include initiating the connection recovery access procedure. The connection recovery access procedure may be a procedure for re-accessing the target cell.

In some embodiments, initiating the connection recovery access procedure may include: determining a first reference signal; and initiating the connection recovery access procedure using the first reference signal.

In some embodiments, the first reference signal may include at least one of the following.
1) A reference signal other than a reference signal corresponding to the first information.
   In some embodiments, the terminal may select other reference signals, excluding the reference signal corresponding to the "spatial relationship information" for which the "access procedure failure" occurs, for the connection recovery access procedure.
   For example, the first information (e.g., "spatial relationship information") may be carried by the first message (e.g., "cell change control signaling"). The reference signal indicated by the "spatial relationship information" in the "cell change control signaling" is SSB#1, and the network has configured SSB#1/#2/#3 for the target cell. In a case where the "access procedure failure" occurs for the terminal, the terminal may select SSB#2/#3 (i.e., excluding SSB#1) and perform uplink access via uplink resources corresponding to SSB#2/#3.
2) A reference signal configured for the first cell by the network device 102.
   In some embodiments, the terminal may select all of reference signals configured for the first cell by the network device. That is, the terminal may select all of reference signals used for uplink access (i.e., including the reference signal corresponding to the "spatial relationship information" for which the "access procedure failure" occurs and other reference signals configured by the network device for the uplink access).
   For example, the first information (e.g., "spatial relationship information") may be carried by the first message (e.g., "cell change control signaling"). The "spatial relationship information" indicated by the "cell change control signaling" indicates SSB#1, and the network configures SSB#1/#2/#3 for the target cell. When the "access procedure failure" occurs for the terminal, the terminal selects SSB#1/#2/#3 and performs the uplink access via the uplink resources corresponding to SSB#1/#2/#3.
3) A reference signal with a measurement value greater than or equal to a preset threshold.

In some embodiments, the terminal 101 may select the reference signal with the measurement value satisfying a certain condition for the connection recovery access procedure.

For example, the reference signal selected by the terminal 101 for the "connection recovery procedure" may be the reference signal with the measurement value being greater than or equal to the threshold. For example, the network configures SSB#1/#2/#3 for the target cell. The measurement value (e.g., RSRP) of SSB#1 is greater than the threshold, then, SSB#1 is used for the "connection recovery procedure", and the uplink access is performed via the uplink resource corresponding to SSB#1.

In some embodiments, the "uplink resource" mentioned above may be an uplink resource corresponding to the reference signal for the "connection recovery procedure", which may be, for example, a resource corresponding to Msg1 or MsgA in the RACH-based access procedure, or a PUSCH resource in the RACH-less access procedure.

In some embodiments, the connection recovery procedure includes any one of: a first access procedure, in which the first access procedure is initiated via a RACH, and the first access procedure includes at least one of a 2-step random access procedure or a 4-step random access procedure; or a second access procedure, in which the second access procedure is not initiated via a RACH, and the second access procedure includes at least one of dynamic scheduling or semi-persistent scheduling.

In some embodiments, the first access procedure may be the RACH-based access procedure, and the second access procedure may be the RACH-less access procedure.

In an example, the connection recovery procedure may refer to the first access procedure, i.e., the RACH-based access procedure.

At step 2105, the terminal 101 determines that a second condition is satisfied.

In some embodiments, the second condition includes that a first numerical count is greater than or equal to a preset numerical count threshold or a first duration is greater than or equal to a preset duration threshold.

In some embodiments, the first numerical count is a sum of a numerical count of failures in accessing the first cell and a numerical count of initiating the connection recovery procedure for the first cell, and the first duration is a sum of a duration of failures in accessing the first cell and a duration of initiating the connection recovery procedure for the first cell.

For example, the second condition means that a total uplink transmission numerical count of "access procedure failure" and "connection recovery procedure" (i.e., the uplink transmission numerical count for the occurred "access procedure failure" plus the uplink transmission numerical count for the "connection recovery procedure") or a total procedure duration (i.e., the duration of the occurred "access procedure failure" plus the duration of the "connection recovery procedure") is greater than or equal to a threshold configured by the network.

At step 2106, the terminal 101 performs a second operation.

In some embodiments, the second operation is configured to initiate a connection reestablishment procedure.

In some embodiments, the name of the second operation is not limited, which may be, for example, "connection reestablishment", etc.

In some embodiments, the terminal 101 may perform the second operation in a case where the second condition is satisfied.

For example, in a case where the total uplink transmission numerical count of "access procedure failure" and "connection recovery procedure" (i.e., the uplink transmission numerical count for the occurred "access procedure failure" plus the uplink transmission numerical count for the "connection recovery procedure") or the total procedure duration (i.e., the duration of the occurred "access procedure failure" plus the duration of the "connection recovery procedure") is greater than or equal to the- threshold configured by the network, the terminal performs a connection reestablishment operation.

In some optional embodiments, the first information and the second information may be sent via the same message or signaling, or via different messages or signalings. The first information and the second information may be sent simultaneously or separately, which is not limited in the disclosure.

The above steps 2101 to 2103 may be optional steps, and steps 2105 to 2106 may be optional steps. That is, one step may be performed, or the plurality of steps may be performed, and one or more of the steps may be omitted or substituted in different embodiments.

The method for controlling communication in embodiments of the disclosure may include at least one of steps S2101 to S2106. For example, step S2101 may be performed as an independent embodiment; step S2104 may be performed as an independent embodiment; step S2101, step S2102, and step S2104 may be performed as an independent embodiment; step S2101, step S2102, step S2103 and step S2104 may be performed as an independent embodiment; step S2101, step S2102, step S2104 and step S2106 may be performed as an independent embodiment; and step S2101, step S2102, step S2104, step S2105 and step S2106 may be performed as an independent embodiment, which is not limited herein.

In some embodiments, steps S2101 and step S2102 may be exchanged in order or performed simultaneously.

In this implementation or embodiment, without conflict, respective steps may be performed independently, arbitrarily combined, or in an exchanged order. Optional implementations or optional examples may be arbitrarily combined, and may also be arbitrarily combined with any steps from other implementations or other embodiments.

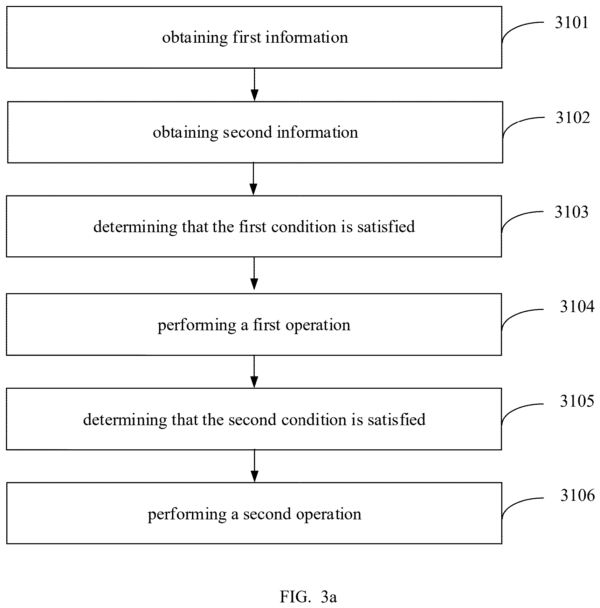

FIG. 3a is a flowchart illustrating a method for controlling communication according to another embodiment of the disclosure. As shown in FIG. 3a, embodiments of the disclosure relate to a method for controlling communication, configured in a terminal 101. The method is includes the following steps S3101 to S3106.

At step 3101, first information is obtained.

For optional implementations of step S3101, reference may be made to optional implementations of step S2101 in FIG. 2 and other related parts in the embodiments associated with FIG. 2, which are not repeated herein.

In some embodiments, the terminal 101 may receive the first information sent by the network device 102, but is not limited thereto, or the terminal 101 may receive the first information sent by other entities.

In some embodiments, the terminal 101 may obtain the first information specified by a protocol.

In some embodiments, the terminal 101 receives the first information via an upper layer(s).

In some embodiments, the terminal 101 obtains the first information via processing.

In some embodiments, the first information indicates a spatial relationship associated with one or more cells configured for the terminal.

In some embodiments, step S3101 is omitted, the terminal 101 autonomously implements the function indicated by the first information, or the above function is default or predefined.

At step 3102, second information is obtained.

For optional implementations of step S3102, reference may be made to optional implementations of step S2102 in FIG. 2 and other related parts in the embodiments associated with FIG. 2, which are not repeated herein.

In some embodiments, the terminal 101 may receive the second information sent by the network device 102, but is not limited thereto, or the terminal 101 may also receive the second information sent by other entities.

In some embodiments, the terminal 101 may obtain the second information specified by a protocol.

In some embodiments, the terminal 101 receives the second information via an upper layer(s).

In some embodiments, the terminal 101 obtains the second information via processing.

In some embodiments, the second information assists the terminal in determining whether a first condition is satisfied.

In some embodiments, step S3102 is omitted, the terminal 101 autonomously implements the function indicated by the second information, or the aforementioned function is default or predefined.

At step 3103, it is determined that the first condition is satisfied.

For optional implementations of step S3103, reference may be made to optional implementations of step S2103 in FIG. 2 and other related parts in the embodiments associated with FIG. 2, which are not repeated herein.

In some embodiments, the terminal 101 may determine that the first condition is satisfied based on the first information and the second information, but is not limited thereto, or the terminal 101 may also determine that the first condition is satisfied based on other information.

In some embodiments, the first condition includes determining a failure in accessing a first cell among one or more cells based on the first information.

In some embodiments, step 3103 is omitted, and the above function is default or predefined.

At step 3104, a first operation is performed.

For optional implementations of step S3104, reference may be made to optional implementations of step S2104 in FIG. 2 and other related parts in the embodiments associated with FIG. 2, which are not repeated herein.

In some embodiments, the first operation initiates a connection recovery procedure.

In some embodiments, step 3104 is omitted, and the above function is default or predefined.

At step 3105, it is determined that a second condition is satisfied.

For optional implementations of step S3105, reference may be made to optional implementations of step S2105 in FIG. 2 and other related parts in the embodiments associated with FIG. 2, which are not repeated herein.

In some embodiments, the terminal 101 may determine that a first numerical count is greater than or equal to a preset numerical count threshold or a first duration is greater than or equal to a preset duration threshold, and determine that the second condition is satisfied, but is not limited thereto, or the terminal 101 may also determine that the second condition is satisfied via other determining methods.

In some embodiments, step 3105 is omitted, and the above function is default or predefined.

At step 3106, a second operation is performed.

For optional implementations of step S3106, reference may be made to optional implementations of step S2106 in FIG. 2 and other related parts in the embodiments associated with FIG. 2, which are not repeated herein.

In some embodiments, step 3106 is omitted, and the above function is default or predefined.

The method for controlling communication in embodiments of the disclosure may include at least one of step S3101 to step S3106. For example, step S3101 may be performed as an independent embodiment; step S3103 may be performed as an independent embodiment; step S3101, step S3102, step S3103 and step S3104 may be performed as an independent embodiment; and step S3101, step S3103 and step S3104 may be performed as an independent embodiment, which is not limited herein.

In some embodiments, step S3101 and step S3102 may be exchanged in order or performed simultaneously.

In some embodiments, step S3102, step S3103, step S3105 and S step 3106 may be optional steps, and one or more of the steps may be omitted or substituted in different embodiments.

In some embodiments, step S3101, step S3102, step S3105 and step S3106 may be optional steps, and one or more of the steps may be omitted or substituted in different embodiments.

In this implementation or embodiment, without conflict, respective steps may be performed independently, arbitrarily combined, or in an exchanged order. Optional implementations or optional examples may be arbitrarily combined, and may also be arbitrarily combined with any steps from other implementations or other embodiments.

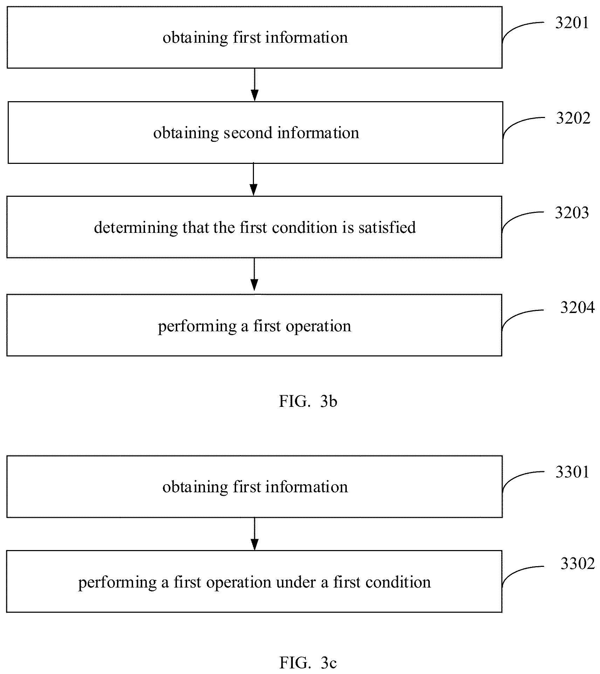

FIG. 3b is a flowchart illustrating a method for controlling communication according to another embodiment of the disclosure. As shown in FIG. 3b, embodiments of the disclosure relate to a method for controlling communication, configured in a terminal 101. The method includes the following steps S3201 to S3204.

At step 3201, first information is obtained.

For optional implementations of step 3201, reference may be made to optional implementations of step 2101 in FIG. 2, step 3101 in FIG. 3a, and other related parts in the embodiments associated with FIG. 2 and FIG. 3a, which are not repeated herein.

In some embodiments, the terminal 101 may receive the first information sent by the network device 102, but is not limited thereto, or the terminal 101 may receive the first information sent by other entities.

In some embodiments, the first information indicates a spatial relationship associated with one or more cells configured for the terminal.

In some embodiments, step S3101 is omitted, the terminal 101 autonomously implements the function indicated by the first information, or the above function is default or predefined.

At step 3202, second information is obtained.

For optional implementations of step 3202, reference may be made to optional implementations of step 2102 in FIG. 2, step 3102 in FIG. 3a, and other related parts in the embodiments associated with FIG. 2 and FIG. 3a, which are not repeated herein.

In some embodiments, the terminal 101 may receive the second information sent by the network device 102, but is not limited thereto, or the terminal 101 may also receive the second information sent by other entities.

In some embodiments, the second information assists the terminal in determining whether a first condition is satisfied.

In some embodiments, step S3102 is omitted, the terminal 101 autonomously implements the function indicated by the second information, or the aforementioned function is default or predefined.

At step 3203, it is determined that a first condition is satisfied.

For optional implementations of step 3203, reference may be made to optional implementations of step 2103 in FIG. 2, step 3103 in FIG. 3a, and other related parts in the embodiments associated with FIG. 2 and FIG. 3a, which are not repeated herein.

In some embodiments, the terminal 101 may determine that the first condition is satisfied based on the first information and the second information, but is not limited thereto, or the terminal 101 may also determine that the first condition is satisfied based on other information.

In some embodiments, the first condition includes determining a failure in accessing a first cell among one or more cells based on the first information.

In some embodiments, step 3103 is omitted, and the above function is default or predefined.

At step 3204, a first operation is performed.

For optional implementations of step 3204, reference may be made to optional implementations of step 2104 in FIG. 2, step 3104 in FIG. 3a, and other related parts in the embodiments associated with FIG. 2 and FIG. 3a, which are not repeated herein.

In some embodiments, the first operation initiates a connection recovery procedure.

In some embodiments, step 3104 is omitted, and the above function is default or predefined.

For detailed descriptions of step S3201 to step S3204, reference may be made to the embodiments shown in FIG. 2.

The method for controlling communication in embodiments of the disclosure may include at least one of step S3201 to step S3204. For example, step S3201 may be performed as an independent embodiment; step S3202 may be performed as an independent embodiment, which is not limited herein; step S3201 and step S3204 may be performed as an independent embodiment; and step S3203 and step S3204 may be performed as an independent embodiment, which is not limited herein.

In some embodiments, step S3201 and step S3202 may be exchanged in order or performed simultaneously.

In some embodiments, step S3202 and step S3203 may be optional steps, and one or more of the steps may be omitted or substituted in different embodiments.

In this implementation or embodiment, without conflict, respective steps may be performed independently, arbitrarily combined, or in an exchanged order. Optional implementations or optional examples may be arbitrarily combined, and may also be arbitrarily combined with other implementations or other embodiments.

FIG. 3c is a flowchart illustrating a method for controlling communication according to another embodiment of the disclosure. As shown in FIG. 3c, embodiments of the disclosure relate to a method for controlling communication, configured in a terminal 101. The method includes the following steps S3301 to S3302.

At step 3301, first information is obtained.

For optional implementations of step 3301, reference may be made to optional implementations of step 2101 in FIG. 2, step 3101 in FIG. 3a, step 3201 in FIG. 3b, and other related parts in the embodiments associated with FIG. 2, FIG. 3a, and FIG. 3b, which are not repeated herein.

In some embodiments, the terminal 101 obtains the first information, in which the first information indicates a spatial relationship associated with one or more cells configured for the terminal.

In some embodiments, the first information is carried by a first message, and the first message indicates the terminal to perform a cell change.

At step 3302, a first operation is performed under a first condition.

For optional implementations of step 3302, reference may be made to optional implementations of step 2104 in FIG. 2, step 3104 in FIG. 3a, step 3204 in FIG. 3b, and other related parts in the embodiments associated with FIG. 2, FIG. 3a, and FIG. 3b, which are not repeated herein.

In some embodiments, the terminal 101 performs the first operation under the first condition, in which the first condition includes determining a failure in accessing a first cell among one or more cells based on the first information, and the first operation is configured to initiate a connection recovery procedure.

In some embodiments, the terminal 101 obtains second information, in which the second information assists the terminal in determining whether the first condition is satisfied.

In some embodiments, the second information includes at least one of: a first parameter, in which the first parameter indicates a measurement threshold of a reference signal; a second parameter, in which the second parameter indicates a numerical count threshold of an uplink signal; or a third parameter, in which the third parameter indicates a type of a reference signal for the terminal to perform beam failure detection.

In some embodiments, the terminal 101 determines that the first condition is satisfied based on the first information and the second information.

In some embodiments, the terminal 101 determining that the first condition is satisfied includes: the terminal 101 determining that a measurement value of a reference signal corresponding to the first information is less than or equal to a first parameter, and determining that the first condition is satisfied, in which the second information includes the first parameter.

In some embodiments, the terminal 101 determining that the first condition is satisfied includes: the terminal 101 determining that a sending numerical count of an uplink signal corresponding to the first information is greater than or equal to a second parameter, and determining that the first condition is satisfied, in which the second information includes the second parameter.

In some embodiments, the terminal 101 determining that the first condition is satisfied includes: the terminal 101 performing beam failure detection on a first beam corresponding to the first information, in which one or more first beams are provided, a reference signal corresponding to the first beam has an association with a reference signal indicated by a third parameter, and the second information includes the third parameter; and determining that a failure occurs on the first beam, and determining that the first condition is satisfied.

In some embodiments, the reference signal corresponding to the first beam having the association with the reference signal indicated by the third parameter includes any one of: the reference signal corresponding to the first beam having the same spatial relationship as the reference signal indicated by the third parameter; the reference signal corresponding to the first beam being the reference signal indicated by the third parameter; or the reference signal corresponding to the first beam belonging to the reference signal indicated by the third parameter.

In some embodiments, the terminal 101 performing the first operation includes at least one of: the terminal 101 sending connection failure information; or the terminal 101 initiating a connection recovery access procedure.

In some embodiments, the connection failure information includes at least one of: a sending numerical count of an uplink signal sent during a process of accessing the first cell; an identifier of the first cell; an identifier of a BWP used during a process of accessing the first cell; an identifier of a reference signal corresponding to the first information; or an access type corresponding to accessing the first cell.

In some embodiments, the terminal 101 initiating the connection recovery access procedure includes: the terminal 101 determining a first reference signal; and the terminal 101 initiating the connection recovery access procedure using the first reference signal.

In some embodiments, the first reference signal includes at least one of: a reference signal other than a reference signal corresponding to the first information; a reference signal configured for the first cell by a network device; or a reference signal with a measurement value greater than or equal to a preset threshold.

In some embodiments, the connection recovery procedure includes any one of: a first access procedure, in which the first access procedure is initiated via an RACH, and the first access procedure includes at least one of a 2-step random access procedure or a 4-step random access procedure; or a second access procedure, in which the second access procedure is not initiated via an RACH, and the second access procedure includes at least one of dynamic scheduling or semi-persistent scheduling.

In some embodiments, the terminal 101 performs a second operation under a second condition, in which the second operation is configured to initiate a connection reestablishment procedure, and the second condition includes that a first numerical count is greater than or equal to a preset numerical count threshold or a first duration is greater than or equal to a preset duration threshold.

In some embodiments, the first numerical count is a sum of a numerical count of failures in accessing the first cell and a numerical count of initiating the connection recovery procedure for the first cell, and the first duration is a sum of a duration of failures in accessing the first cell and a duration of initiating the connection recovery procedure for the first cell.

For detailed descriptions of steps step S3301 to step S3302, reference may be made to embodiments shown in FIG. 2.

The method for controlling communication in embodiments of the disclosure may include at least one of step S3301 to step S3302. For example, step S3301 may be performed as an independent embodiment; step S3302 may be performed as an independent embodiment; step S3301 and step S3302 may be performed as an independent embodiment, which is not limited herein.

In this implementation or embodiment, without conflict, respective steps may be performed independently, arbitrarily combined, or in an exchanged order. Optional implementations or optional examples may be arbitrarily combined, and may also be arbitrarily combined with other implementations or other embodiments.

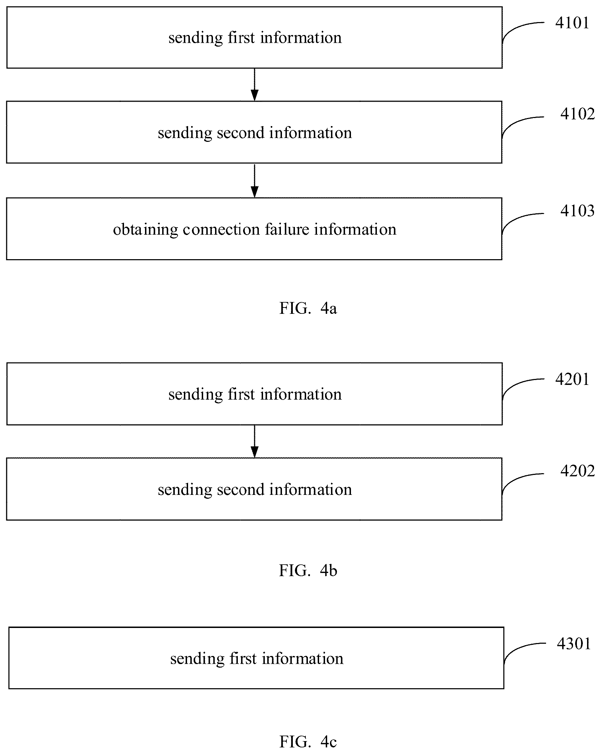

FIG. 4a is a flowchart illustrating a method for controlling communication according to another embodiment of the disclosure. As shown in FIG. 4a, embodiments of the disclosure relate to a method for controlling communication, configured in a network device 102. The method includes the following steps S4101 to S4103.

At step 4101, first information is sent.

For optional implementations of step 4101, reference may be made to optional implementations of step 2101 in FIG. 2 and other related parts in the embodiments associated with FIG. 2, which are not repeated herein.

In some embodiments, the network device 102 may send the first information to the terminal 101, but is not limited thereto, and may also send the first information to other entities.

In some embodiments, the first information indicates a spatial relationship associated with one or more cells configured for the terminal. Optional implementations, reference may be made to optional implementations of step 2103 in FIG. 2 and other related parts in the embodiments associated with FIG. 2, which are not repeated herein.

At step 4102, second information is sent.

For optional implementations of step 4102, reference may be made to optional implementations of step 2102 in FIG. 2 and other related parts in the embodiments associated with FIG. 2, which are not repeated herein.

In some embodiments, the network device 102 may send the second information to the terminal 101, but is not limited thereto, or may also send the second information to other entities.

In some embodiments, the second information assists the terminal in determining whether a first condition is satisfied. For optional implementations, reference may be made to optional implementations of step 2103 in FIG. 2 and other related parts in the embodiments associated with FIG. 2, which is not repeated herein.

At step 4103, connection failure information is obtained.

For optional implementations of step 4103, reference may be made to optional implementations of step 2104 in FIG. 2 and other related parts in the embodiments associated with FIG. 2, which is not repeated herein.

In some embodiments, the network device 102 may receive the connection failure information sent by the terminal 101 in a case of performing the first operation, but is not limited thereto, or may also obtain the connection failure information from other entities.

In some embodiments, the connection failure information includes at least one of: a sending numerical count of an uplink signal sent during a process of accessing the first cell; an identifier of the first cell; an identifier of a BWP used during a process of accessing the first cell; an identifier of a reference signal corresponding to the first information; or an access type corresponding to accessing the first cell.

The method for controlling communication in embodiments of the disclosure may include at least one of step S4101 to step S4103. For example, step S4101 may be performed as an independent embodiment; step S4103 may be performed as an independent embodiment; step S4101 and step S4102 may be performed as an independent embodiment; and step S4101 and step S4103 may be performed as an independent embodiment, which is not limited herein.

In some embodiments, step S4101 and step S4102 may be exchanged in order or performed simultaneously.

In some embodiments, step S4101, step S4102 and step S4103 may be optional steps, and one or more of the steps may be omitted or substituted in different embodiments.

In some embodiments, step S4102 and step S4103 may be optional steps, and one or more of the steps may be omitted or substituted in different embodiments.

In this implementation or embodiment, without conflict, respective steps may be performed independently, arbitrarily combined, or in an exchanged order. Optional implementations or optional examples may be arbitrarily combined, and may also be arbitrarily combined with other implementations or other embodiments.

FIG. 4b is a flowchart illustrating a method for controlling communication according to another embodiment of the disclosure. As shown in FIG. 4b, embodiments of the disclosure relate to a method for controlling communication, configured in a network device 102. The method includes the following steps S4201 to S4202.

At step 4201, first information is sent.

For optional implementations of step 4201, reference may be made to optional implementations of step 2101 in FIG. 2, step 4101 in FIG. 4a, and other related parts in the embodiments associated with FIG. 2 and FIG. 4a, which are not repeated herein.

In some embodiments, the network device 102 may send the first information to the terminal 101, but is not limited thereto, or may also send the first information to other entities.

In some embodiments, the first information indicates a spatial relationship associated with one or more cells configured for the terminal.

At step 4202, second information is sent.

For optional implementations of step 4202, reference may be made to optional implementations of step 2102 in FIG. 2, step 4102 in FIG. 4a, and other related parts in the embodiments associated with FIG. 2 and FIG. 4a, which are not repeated herein.

In some embodiments, the network device 102 may send the second information to the terminal 101, but is not limited thereto, and may also send the second information to other entities.

In some embodiments, the second information assists the terminal in determining whether a first condition is satisfied.

For detailed descriptions of step S4201 to step S4202, reference may be made to embodiments shown in FIG. 2.

The method for controlling communication in embodiments of the disclosure may include at least one of step S4201 to step S4202. For example, step S4201 may be performed as an independent embodiment; step S4202 may be performed as an independent embodiment, which is not limited herein.

In this implementation or embodiment, without conflict, respective steps may be performed independently, arbitrarily combined, or in an exchanged order. Optional implementations or optional examples may be arbitrarily combined, and may also be arbitrarily combined with other implementations or other embodiments.

FIG. 4c is a flowchart illustrating a method for controlling communication according to another embodiment of the disclosure. As shown in FIG. 4c, embodiments of the disclosure relate to a method for controlling communication, configured in a network device 102. The method includes the following step S4301.

At step 4301, first information is sent.

For optional implementations of step 4301, reference may be made to optional implementations of step 2101 in FIG. 2, step 4101 in FIG. 4a, step 4201 in FIG. 4b, and other related parts in the embodiments associated with FIG. 2, which are not repeated herein.

In some embodiments, the network device 102 may send the first information to the terminal 101, but is not limited thereto, or may also send the first information to other entities.

In some embodiments, the network device 102 sends the first information, in which the first information indicates a spatial relationship associated with one or more cells configured for a terminal; the first information assists the terminal in determining that a first condition is satisfied; and the first condition includes a failure in accessing a first cell among the one or more cells.

In some embodiments, the network device 102 may also send second information, in which the second information is configured to assist the terminal in determining whether the first condition is satisfied.

In some embodiments, the second information is configured to assist the terminal in determining that the first condition is satisfied, and the second information includes at least one of: a first parameter, in which the first parameter indicates a measurement threshold of a reference signal; a second parameter, in which the second parameter indicates a numerical count threshold of an uplink signal; or a third parameter, in which the third parameter indicates a type of a reference signal for the terminal to perform beam failure detection.

In some embodiments, the network device 102 may also obtain connection failure information, in which the connection failure information includes at least one of: a sending numerical count of an uplink signal sent during a process of accessing the first cell; an identifier of the first cell; an identifier of a BWP used during a process of accessing the first cell; an identifier of a reference signal corresponding to the first information; or an access type corresponding to accessing the first cell.

In some embodiments, the first information is carried by a first message, and the first message indicates the terminal to perform a cell change.

For detailed descriptions of step S4301, reference may be made to embodiments shown in FIG. 2.

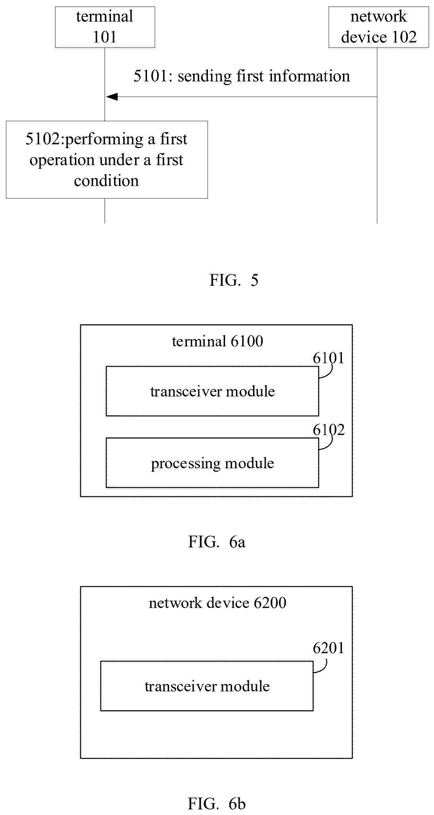

FIG. 5 is a flowchart illustrating a method for controlling communication according to another embodiment of the disclosure. As shown in FIG. 5, embodiments of the disclosure relate to a method for controlling communication, configured in a communication system. The method includes the following steps S5101 to S5102.

At step 5101, a network device 102 sends first information to a terminal 101.

For optional implementations of step 5101, reference may be made to optional implementations of step 2101 in FIG. 2, step 3101 in FIG. 3a, step 3201 in FIG. 3b, step 3301 in FIG. 3c, step 4101 in FIG. 4a, step 4201 in FIG. 4b, step 4301 in FIG. 4c, and other related parts in the embodiments associated with FIG. 2, FIG. 3a, FIG. 3b, FIG. 3c, FIG. 4a, FIG. 4b, and FIG. 4c, which are not repeated herein.

At step 5102, the terminal 101 performs a first operation under a first condition.

For optional implementations of step 5102, reference may be made to optional implementations of step 2104 in FIG. 2, step 3104 in FIG. 3a, step 3204 in FIG. 3b, step 3302 in FIG. 3c, and other related parts in the embodiments associated with FIG. 2, FIG. 3a, FIG. 3b, and FIG. 3c, which are not repeated herein.

In some embodiments, the above method may include the methods described in the embodiments related to the communication system, the terminal, the network device, etc., which are not repeated herein.

The following is an illustrative description of the above method.

In some embodiments, the method may include at least one of the following steps.

At step 1, a network device provides one or more candidate configurations to a terminal, for example, candidate configurations provided via an RRC reconfiguration message.

One candidate configuration may include one or more configurations for one or more cells (or cell groups).

In some embodiments, the network device may control, via a signaling, the terminal to perform a change among a plurality of candidate configurations, for example, a dynamic cell (or cell group) change.

At step 2, the network device sends a cell change control signaling.

The cell change control signaling carries spatial relationship information, for example, a TCI-state.

At step 3, the terminal initiates an access procedure in a target cell based on the spatial relationship information indicated in the cell change control signaling.

In some embodiments, the access procedure initiated in the target cell includes at least one of: RACH-based access, or RACH-less access. The RACH-based access includes at least one of a 2-step random access procedure or a 4-step random access procedure. The RACH-less access includes at least one of dynamic scheduling or semi-persistent scheduling.

At step 4, the terminal triggers a connection recovery procedure.

In some embodiments, in a case that an access procedure failure occurs in a case where the terminal initiates an access procedure in a target cell based on the spatial relationship information indicated in the cell change control signaling, the terminal triggers the connection recovery procedure.

The access procedure failure includes any one of the following.

A failure type 1 includes: a measurement value of a reference signal corresponding to the spatial relationship information being less than or equal to a threshold. For example, measurement values of RSRPs of SSB#1 and SSB#2 included in TCI-state#1 are both less than a threshold configured by the network.

A failure type 2 includes: a numerical count of sending an uplink signal by the terminal being greater than or equal to the threshold. For example, a numerical count of sending MsgA in the 2-step random access procedure, a numerical count of sending Msg1 in the 4-step random access procedure, or a numerical count of sending a PUSCH in the RACH-less procedure is greater than or equal to the threshold configured by the network.

A failure type 3 includes: occurrence of a beam failure.

The beam failure type includes any one of: a failure occurring on at least one beam corresponding to the spatial relationship information; or a failure occurring on all of beams corresponding to the spatial relationship information.

For the failure type 3, a reference signal for the beam failure detection is any one of the following signals.

A reference signal 1 is a reference signal for the beam failure detection that has the same spatial relationship as a reference signal identified by the spatial relationship information indicated by the cell change control signaling. For example, the spatial relationship information indicated in the cell change control signaling indicates SSB#1, a reference signal configured for the beam failure detection is SSB#2, and SSB#1 and SSB#2 have the same spatial relationship (e.g., the same TCI-state or QCL identifier).

A reference signal 2 is a reference signal identified by the spatial relationship information indicated in the cell change control signaling, configured for the beam failure detection. For example, if the spatial relationship information indicated in the cell change control signaling indicates SSB#1, then SSB#1 is configured for the beam failure detection.

A reference signal 3 is, a reference signal configured by the beam failure detection when a reference signal configured for the beam failure detection belongs to a reference signal identified by the spatial relationship information indicated in the cell change control signaling, , which is configured for the beam failure detection. For example, the spatial relationship information indicated in the cell change control signaling indicates SSB#1, and reference signals configured for the beam failure detection are SSB#1 (e.g., for BFD RS Set#1) and SSB#2 (e.g., for BFD RS Set#2), then SSB#1 is configured for the beam failure detection.

The behavior of the connection recovery procedure includes any one of the following.

A behavior 1 includes: reporting, by the terminal, connection failure information. The connection failure information includes at least one of: an uplink transmission numerical count, an identifier of the cell where the failure occurs, an identifier of the BWP where the failure occurs, an identifier of the reference signal where the failure occurs (e.g., SSB#1 or CSI-RS#1), or an uplink access type where the failure occurs (e.g., 2-step random access procedure, 4-step random access procedure, RACH-less access (e.g., dynamically scheduled RACH-less access, semi-persistently scheduled RACH-less access)).

A behavior 2 includes: initiating, by the terminal, the connection recovery access procedure.

Rules for selecting a reference signal for the connection recovery access procedure includes any one of the following.

A rule 1 includes: selecting other reference signals, excluding the reference signal corresponding to the spatial relationship information for which the access procedure failure occurs. For example, the spatial relationship information indicated in the "cell change control signaling" indicates SSB#1, the network is configured with SSB#1/#2/#3 for the target cell, and the access procedure failure occurs for the terminal, then the terminal selects SSB#2/#3 (i.e., excluding SSB#1) and performs uplink access via uplink resources corresponding to SSB#2/#3.

A rule 2 includes: selecting all of reference signals used for the uplink access, in which the signals include the reference signal corresponding to the spatial relationship information for which the access procedure failure occurs and other reference signals configured for the uplink access. For example, the spatial relationship information indicated in the cell change control signaling indicates SSB#1, the network is configured with SSB#1/#2/#3 for the target cell, and the access procedure failure occurs for the terminal, then the terminal selects SSB#1/#2/#3 and performs the uplink access via the uplink resources corresponding to SSB#1/#2/#3.

In rule 2, the uplink resources for the connection recovery access procedure are the uplink resources corresponding to the reference signal selected for the connection recovery procedure, for example, a resource for Msg1 or MsgA in a RACH procedure; a resource for a PUSCH in a RACH-less procedure.

Further, in some embodiments, the connection recovery access procedure may be a random access procedure.

Further, in some embodiments, the reference signal selected for the connection recovery procedure may be limited to a reference signal with the measurement value being greater than or equal to the threshold.

In some embodiments, in a case where a total uplink transmission numerical count of the access procedure failure and the connection recovery procedure (i.e., the uplink transmission numerical count for the occurred access procedure failure plus the uplink transmission numerical count for the connection recovery procedure), or a total procedure duration (i.e., the duration of the occurred access procedure failure plus the duration of the connection recovery procedure) is greater than or equal to the threshold configured by the network, the terminal triggers a connection reestablishment procedure.

The uplink transmission numerical count includes at least one of: a sending numerical count of MsgA in the 2-step random access procedure, a sending numerical count of Msg 1 in the 4-step random access procedure, or a sending numerical count of the PUSCH in the RACH-less procedure.

Embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6a is a block diagram illustrating a terminal according to an embodiment of the disclosure. As shown in FIG. 6a, the terminal includes a transceiver module 6101 and a processing module 6102. In some embodiments, the transceiver module is configured to obtain first information, in which the first information indicates a spatial relationship associated with one or more cells configured for the terminal. The processing module is configured to perform a first operation under a first condition, in which the first condition includes determining a failure in accessing a first cell among the one or more cells based on the first information, and the first operation is configured to initiate a connection recovery procedure. In an example, the transceiver module is configured to perform at least one of the communication steps (e.g., steps S2101 and S2102, but is not limited thereto), such as sending and/or receiving steps, performed by the terminal 101 in any of the above methods, which is not repeated herein. In an example, the processing module is configured to perform at least one of other steps (e.g., steps S2103, S2104, S2105 and S2106, but is not limited thereto) performed by the terminal 101 in any of the above methods, which is not repeated herein.

FIG. 6b is a block diagram illustrating a network device according to an embodiment of the disclosure. As shown in FIG. 6b, the network device includes a transceiver module 6201. In some embodiments, the transceiver module is configured to send first information, in which the first information indicates a spatial relationship associated with one or more cells configured for a terminal; the first information is configured to assist the terminal in determining that a first condition is satisfied; and the first condition include a failure in accessing a first cell among the one or more cells. In an example, the transceiver module is configured to perform at least one of the communication steps (e.g., steps S2101 and S2102, but is not limited thereto), such as sending and/or receiving steps, performed by the network device 102 in any of the above methods, which is not repeated herein.

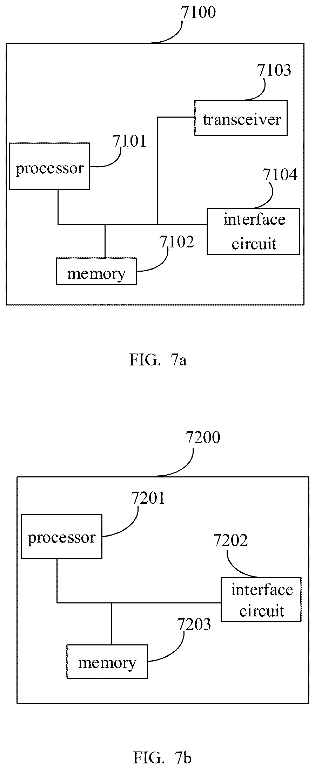

FIG. 7a is a block diagram of a communication device 7100 according to an embodiment of the disclosure. The communication device 7100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, please refer to the description in the above method embodiments.

As shown in FIG. 7a, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The communication device 7100 is configured to execute any one of the above methods.

In some embodiments, the communication device 7100 further includes one or more memories 7102 for storing instructions. In an example, all or some of the memories 7102 may also be located outside the communication device 7100.

In some embodiments, the communication device 7100 further includes one or more transceivers 7103. When the communication device 7100 includes one or more transceivers 7103, the transceiver 7103 performs the communication steps such as sending and/or receiving in the above method, and the processor 7101 performs other steps.

In some embodiments, the transceiver may include a receiver and a transmitter, which may be separate or integrated together. In an example, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

In some embodiments, the communication device 7100 further includes one or more interface circuits 7104. In an example, the interface circuit 7104 is connected to the memory 7102. The interface circuit 7104 may be configured to receive signals from the memory 7102 or other devices, and may be configured to send signals to the memory 7102 or other devices. For example, the interface circuit 7104 may read instructions stored in the memory 7102 and send the instructions to the processor 7101.

The communication device 7100 in the above embodiments may be a network device or a terminal, but a scope of the communication device 7100 in the disclosure is not limited to this, and a structure of the communication device 7100 may not be limited by FIG. 7a. The communication device may be an independent device or a part of a larger device. For example, the communication device may be: 1) an independent IC, or a chip, or a chip system or a subsystem; 2) a collection including one or more IC, In an example, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 7b is a block diagram of a chip 7200 according to an embodiment of the disclosure. For a case where the communication device 7100 may be a chip or a chip system, reference may be made to the block diagram of the chip 7200 shown in FIG. 7b, but not limited to this.

The chip 7200 includes one or more processors 7201. The processor 7201 is configured to invoke instructions to cause the chip 7200 to implement any one of the above methods.

In some embodiments, the chip 7200 further includes one or more interface circuits 7202. The interface circuit 7202 is connected to a memory 7203. The interface circuit 7202 may be configured to receive signals from the memory 7203 or other devices, and may be configured to send signals to the memory 7203 or other devices. For example, the interface circuit 7202 may read the instructions stored in the memory 7203 and send the instructions to the processor 7201. In an example, terms such as interface circuit, interface, transceiver pin, transceiver, etc. may be used interchangeably.

In some embodiments, the chip 7200 further includes one or more memories 7203 for storing instructions. In an example, all or some of the memories 7203 may be located outside the chip 7200.

The disclosure also provides a storage medium for storing instructions. When the instructions are running on the communication device 7100, the communication device 7100 is caused to implement any one of the above methods. In an example, the above storage medium is an electronic storage medium. In an example, the above storage medium is a computer-readable storage medium, which is not limited to this, and the above storage medium may also be a storage medium readable by other devices. In an example, the above storage medium may be a non-transitory storage medium, which is not limited to this, and the above storage medium may also be a transitory storage medium.

The disclosure also provides a program product. When the program product is executed by the communication device 7100, the communication device 7100 is caused to implement any one of the above methods. In an example, the above program product is a computer program product.

The disclosure also provides a computer program. When the computer program is running on a computer, the computer is caused to implement any one of the above methods.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

Those skilled in the related art may clearly understand that, for the convenience and conciseness of description, for a specific operating process of a system, an apparatus and a unit described above, reference may be made to a corresponding process in the above method embodiments, which is not repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for controlling communication, performed by a terminal, comprising:
obtaining first information, wherein the first information indicates a spatial relationship associated with one or more cells configured for the terminal; and
performing a first operation under a first condition, wherein the first condition comprises determining a failure in accessing a first cell among the one or more cells based on the first information, and the first operation is configured to initiate a connection recovery procedure, the connection recovery procedure is configured to access one of the one or more cells.

2. The method according to claim 1, comprising:
obtaining second information, wherein the second information is configured to assist the terminal in determining whether the first condition is satisfied.

3. The method according to claim 2, wherein the second information comprises at least one of:
a first parameter, wherein the first parameter indicates a measurement threshold of a reference signal;
a second parameter, wherein the second parameter indicates a numerical count threshold of an uplink signal; or
a third parameter, wherein the third parameter indicates a type of a reference signal for the terminal to perform beam failure detection.

4. The method according to claim 2 or 3, comprising:
determining that the first condition is satisfied based on the first information and the second information.

5. The method according to claim 4, wherein determining that the first condition is satisfied based on the first information and the second information comprises:
obtaining a measurement value by determining a reference signal corresponding to the first information;
measuring the reference signal corresponding to the first information; and
determining that the measurement value is less than or equal to a first parameter, and determining that the first condition is satisfied,
wherein the second information comprises the first parameter.

6. The method according to claim 4, wherein determining that the first condition is satisfied based on the first information and the second information comprises:
determining that a sending numerical count of an uplink signal corresponding to the first information is greater than or equal to a second parameter, and determining that the first condition is satisfied,
wherein the second information comprises the second parameter.

7. The method according to claim 4, wherein determining that the first condition is satisfied based on the first information and the second information comprises:
performing beam failure detection on a first beam corresponding to the first information, wherein one or more first beams are provided, a reference signal corresponding to the first beam has an association with a reference signal indicated by a third parameter, and the second information comprises the third parameter; and
determining that a failure occurs on the first beam, and determining that the first condition is satisfied.

8. The method according to claim 7, wherein the reference signal corresponding to the first beam having the association with the reference signal indicated by the third parameter comprises any one of:
the reference signal corresponding to the first beam having the same spatial relationship as the reference signal indicated by the third parameter;
the reference signal corresponding to the first beam being the reference signal indicated by the third parameter; or
the reference signal corresponding to the first beam belonging to the reference signal indicated by the third parameter.

9. The method according to any one of claims 1 to 8, wherein performing the first operation comprises at least one of:
sending connection failure information, wherein the connection failure information is configured to identify relevant information of the failure in accessing the first cell; or
initiating a connection recovery access procedure.

10. The method according to claim 9, wherein the connection failure information comprises at least one of:
a sending numerical count of an uplink signal sent during a process of accessing the first cell;
an identifier of the first cell;
an identifier of a bandwidth part (BWP) used during a process of accessing the first cell;
an identifier of a reference signal corresponding to the first information; or
an access type corresponding to accessing the first cell.

11. The method according to claim 9 or 10, wherein initiating the connection recovery access procedure comprises:
determining a first reference signal; and
initiating the connection recovery access procedure using the first reference signal.

12. The method according to claim 11, wherein the first reference signal comprises at least one of:
a reference signal other than a reference signal corresponding to the first information;
a reference signal configured for the first cell by a network device; or
a reference signal with a measurement value greater than or equal to a preset threshold.

13. The method according to any one of claims 1 to 12, wherein the connection recovery procedure comprises any one of:
a first access procedure, wherein the first access procedure is initiated via a random access channel (RACH), and the first access procedure comprises at least one of a 2-step random access procedure or a 4-step random access procedure; or
a second access procedure, wherein the second access procedure is not initiated via a RACH, and the second access procedure comprises at least one of dynamic scheduling or semi-persistent scheduling.

14. The method according to any one of claims 1 to 13, further comprising:
performing a second operation under a second condition,
wherein the second operation is configured to initiate a connection reestablishment procedure, and the second condition comprises that a first numerical count is greater than or equal to a preset numerical count threshold or a first duration is greater than or equal to a preset duration threshold.

15. The method according to claim 14, wherein the first numerical count is a sum of a numerical count of failures in accessing the first cell and a numerical count of initiating the connection recovery procedure for the first cell, and the first duration is a sum of a duration of failures in accessing the first cell and a duration of initiating the connection recovery procedure for the first cell.

16. The method according to any one of claims 1 to 15, wherein the first information is carried by a first message, and the first message indicates the terminal to perform a cell change.

17. A method for controlling communication, performed by a network device, comprising:
sending first information, wherein the first information indicates a spatial relationship associated with one or more cells configured for a terminal; the first information is configured to assist the terminal in determining that a first condition is satisfied; and the first condition comprise a failure in accessing a first cell among the one or more cells.

18. The method according to claim 17, comprising:
sending second information, wherein the second information is configured to assist the terminal in determining whether the first condition is satisfied.

19. The method according to claim 18, wherein the second information is configured to assist the terminal in determining that the first condition is satisfied, and the second information comprises at least one of:
a first parameter, wherein the first parameter indicates a measurement threshold of a reference signal;
a second parameter, wherein the second parameter indicates a numerical count threshold of an uplink signal; or
a third parameter, wherein the third parameter indicates a type of a reference signal for the terminal to perform beam failure detection.

20. The method according to any one of claims 17 to 19, further comprising:
obtaining connection failure information, wherein the connection failure information comprises at least one of:
a sending numerical count of an uplink signal sent during a process of accessing the first cell;
an identifier of the first cell;
an identifier of a bandwidth part (BWP) used during a process of accessing the first cell;
an identifier of a reference signal corresponding to the first information; or
an access type corresponding to accessing the first cell.

21. The method according to any one of claims 17 to 20, wherein the first information is carried by a first message, and the first message indicates the terminal to perform a cell change.

22. A terminal, comprising:
a transceiver module, configured to obtain first information, wherein the first information indicates a spatial relationship associated with one or more cells configured for the terminal; and
a processing module, configured to perform a first operation under a first condition, wherein the first condition comprises determining a failure in accessing a first cell among the one or more cells based on the first information, and the first operation is configured to initiate a connection recovery procedure.

23. A network device, comprising:
a transceiver module, configured to send first information, wherein the first information indicates a spatial relationship associated with one or more cells configured for a terminal; the first information is configured to assist the terminal in determining that a first condition is satisfied; and the first condition comprise a failure in accessing a first cell among the one or more cells.

24. A communication device, comprising:
one or more processors;
wherein the one or more processors are configured to invoke instructions to cause the communication device to implement the method according to any one of claims 1 to 21.

25. A communication system, comprising:
a terminal, configured to execute the method according to any one of claims 1 to 16, and a network device, configured to execute the method according to any one of claims 17 to 21.

26. A storage medium storing instructions that, when executed on a communication device, cause the communication device to implement the method according to any one of claims 1 to 16, or to implement the method according to any one of claims 17 to 21.

27. A method for communication control, comprising:
sending, by a network device, first information to a terminal, wherein the first information indicates a spatial relationship associated with one or more cells configured for the terminal;
determining, by the terminal, a handover from a second cell to a first cell, wherein the one or more cells comprise the first cell; and
performing, by the terminal, a first operation under a first condition, wherein the first condition comprises determining a failure in accessing a first cell among the one or more cells based on the first information, and the first operation is configured to initiate a connection recovery procedure, the connection recovery procedure is configured to access one of the one or more cells.
